# FASCICULE DE BREVET EUROPEEN

(11) **EP 3 832 407 B1**
(45) Date de publication et mention de la délivrance du brevet: **27.03.2024**
(21) Numéro de dépôt: 19214192.7
(22) Date de dépôt: 06.12.2019
(51) Int. Cl.: G04G 21/02, G04G 21/04, H04W 12/06, G06F 21/32

(54) **PROCÉDÉ DE CONNEXION SÉCURISÉE D'UNE MONTRE À UN SERVEUR DISTANT**
GESICHERTES VERBINDUNGSVERFAHREN EINER ARMBANDUHR MIT EINEM FERNSERVER
METHOD FOR SECURE CONNECTION OF A WATCH TO A REMOTE SERVER

(43) Date de publication de la demande: 09.06.2021
(73) Titulaire: Tissot S.A., 2400 Le Locle (CH)
(72) Inventeur: FRANZI, Edoardo, 1400 Cheseaux-Noréaz (CH)
(74) Mandataire: ICB SA

(56) Documents cités:
- WO-A1-2016/076641
- JP-A- 2016 110 368
- US-A1- 2003 037 264
- US-B1- 10 075 846

## Description

### Domaine technique

La présente invention concerne un procédé de connexion sécurisée d'une montre à un serveur distant et un système mettant en oeuvre un tel procédé.

L'invention concerne également un programme d'ordinateur.

### Art antérieur

Une montre comprend un ensemble de fonctions qui peut être utilisé par le porteur. De telles fonctions peuvent permettre d'accéder à des serveurs distants mettant en oeuvre des prestations de service telles que des prestations bancaires, des prestations commerciales (boutiques en ligne, entreprises de commerce électronique), des prestations de messagerie électronique ou de messagerie instantanée. Dans un tel contexte, le porteur de la montre doit gérer et stocker un nombre croissant d'identifiants, de mots de passe et de codes d'accès qui sont des éléments d'authentification. De tels éléments d'authentification sont souvent à porter du porteur lorsqu'il doit initier une connexion à un serveur distant pour bénéficier d'une prestation de service. Pour se faire, il est courant que le porteur à défaut de mémoriser toutes ces données confidentielles, préfère les regrouper sur un support papier ou encore dans un fichier informatique standard de type tableur archivé sur des supports permettant le stockage de données numériques, que ce soit des disques durs, de la mémoire flash, une clé USB, etc.. Cette situation présente l'inconvénient que les documents/fichiers contenant ces éléments d'authentification peuvent être stockés dans un environnement peu ou pas protégé. Cela introduit une faille de sécurité importante dans la gestion des éléments d'authentification.

Dans ces conditions, on comprend qu'il existe un besoin de trouver une solution alternative, notamment qui ne présente pas les inconvénients de l'art antérieur.

Le document JP2016110368A divulgue un système de connexion sécurisée d'un utilisateur à un serveur. Ce système comporte au moins trois éléments: le serveur, un terminal portable, tel qu'un téléphone portable, et une montre connectée ayant aussi des capteurs biométriques. La montre est utilisée dans un rôle d'esclave par rapport au téléphone portable: l'utilisateur déclenche une application sur son téléphone portable, laquelle nécessite d'une authentification; ensuite, le téléphone portable envoie à la montre des instructions indiquant le type de données à fournir pour permettre l'authentification; ensuite, suivant les instructions reçues, la montre mesure des paramètres biométriques de son porteur et les transfère au téléphone portable; à partir de ce point, l'authentification est effectuée par le téléphone portable à l'aide du serveur externe.

### Résumé de l'invention

Un but de la présente invention est par conséquent de proposer un procédé de connexion sécurisée d'une montre à un serveur distant qui est fiable et robuste.

Dans ce dessein, l'invention concerne un procédé tel que défini dans la revendication indépendante 1 annexée.

Dans d'autres modes de réalisation :
- l'étape de transmission comprend une sous-étape de sélection de l'élément d'authentification relatif à ladite fonction sélectionnée en prévision de son envoi au serveur distant et ce, parmi des éléments d'authentification archivés dans les éléments de mémoire de l'unité de traitement de la montre ;
- l'étape de réalisation d'une authentification comprend une sous-étape de comparaison entre l'élément d'authentification reçu de la montre et un élément d'authentification de référence archivé dans le serveur ;
- l'étape d'identification comprend une sous-étape d'acquisition par au moins un capteur biométrique multispectral de peau compris dans la montre, d'une pluralité d'images d'une portion de peau du porteur adjacente audit capteur, lesdites images comprenant ledit au moins un élément d'information biométrique compris dans cette portion de peau ;
- l'étape d'identification comprend une sous-étape de génération d'un élément d'identification numérique à partir dudit au moins un élément d'information biométrique compris dans les images acquises de la portion de peau ;
- l'étape d'identification comprend une sous-étape de validation d'un élément d'identification numérique généré en prévision de l'identification du porteur ;
- l'élément d'information biométrique est relatif à un réseau vasculaire ou à une texture de cette peau.

L'invention concerne également un système de connexion tel que défini dans la revendication 8 annexée.

L'invention concerne aussi un programme d'ordinateur tel que défini dans la revendication 9 annexée.

### Brève description des figures

D'autres particularités et avantages ressortiront clairement de la description qui en est faite ci-après, à titre indicatif et nullement limitatif, en référence aux figures annexées, dans lesquelles :
- la figure 1 est une représentation schématique d'un système de connexion sécurisée d'une montre à un serveur distant, selon un mode de réalisation de l'invention, et
- la figure 2 est un logigramme relatif à un procédé de connexion sécurisée de la montre au serveur distant, selon le mode de réalisation de l'invention.

### Description détaillée de l'invention

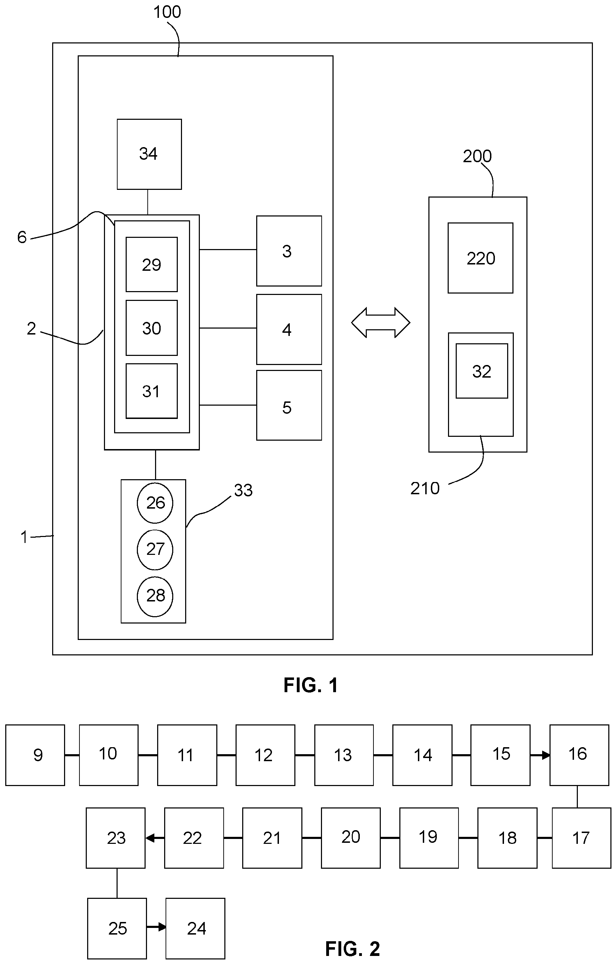

Sur la figure 1 est représenté un système 1 de connexion sécurisée d'une montre à un serveur distant 200. Dans ce système 1, la montre 100 est de préférence une montre 100 mécanique connectée à affichage hybride. Dans ce contexte, la montre 100 comprend un corps tel qu'une boîte de montre, et un élément d'attache tel qu'un bracelet permettant de fixer ce corps par exemple au poignet du porteur. Cette montre 100 comprend plus précisément de manière non limitative et/ou non exhaustive :
- une unité de traitement 2 comportant des ressources matérielles et logicielles en particulier au moins un processeur coopérant avec des éléments de mémoire 6;
- une interface de diffusion d'une information visuelle 3 telle qu'un cadran d'affichage hybride pourvu d'une première composante d'affichage analogique et d'une deuxième composante d'affichage numérique et/ou alphanumérique ;
- une interface de diffusion d'une information sonore 4 telle qu'un hautparleur ;
- une interface de communication sans fil 5 (par exemple cellulaire, WLAN Bluetooth, etc.) ;
- une interface de saisie 34 tel qu'un clavier ou encore une interface tactile comprise par exemple dans l'interface de diffusion d'une information visuelle 3, et
- un capteur biométrique multispectral de peau 33 comprenant au moins un capteur photographique 26, au moins une source d'éclairage multispectral 27 et au moins un capteur d'image thermique 28, la source d'éclairage 27 pouvant émettre un rayonnement lumineux dans des longueurs d'ondes comprises entre 300 et 1100 nm, de plus cette source d'éclairage 27 peut être du type laser.

Dans cette montre 100, l'unité de traitement 2 est reliée entre autres aux interfaces de diffusion d'une information visuelle et sonore 3, 4, à l'interface de saisie 34 ainsi qu'à l'interface de communication sans fil 5 et au capteur biométrique multispectral 33. On notera en complément que le capteur biométrique multispectral 33 est agencé dans le corps du dispositif électronique 100 et/ou dans l'élément d'attache.

Dans ce système 1, le serveur 200 comprend une unité de traitement 210 et une interface de communication 220. Ce serveur 200 est un serveur distant d'un fournisseur de prestation de service par exemple un serveur d'un fournisseur de prestations bancaires ou de prestations commerciales (boutiques en ligne, entreprises de commerce électronique), de prestations de messagerie électronique ou de messagerie instantanée. Dans ce contexte, l'unité de traitement 210 de ce serveur 200 comprend des éléments de mémoire comportant un élément d'authentification de référence 32. Cet élément d'authentification de référence 32 est apte à participer à la réalisation d'une connexion sécurisée entre le serveur distant 200 et ladite montre 100 et peut comprendre des clés, certificats, codes d'authentification, mots de passe et codes personnels, etc...

Cette montre 100 est apte à assurer le contrôle de l'identité du porteur authentifié de manière discrète c'est-à-dire sans intervention/interaction directe du porteur avec cette montre 100, afin qu'il puisse effectuer une connexion à un serveur distant 200 tout le temps qu'il la porte. L'identification du porteur est alors effectuée de manière transparente et discrète et ce, à partir d'au moins un élément d'information biométrique compris dans la peau de ce porteur tel que le réseau vasculaire de la peau ou encore la texture de cette peau. Cette peau du porteur qui recouvre son corps a une particularité, moins évidente à envisager par l'homme de l'art car non visualisable naturellement par l'oeil humain, liée aux caractéristiques d'absorption et de réflexion à différentes longueurs d'onde (spectre) des composantes de la peau, situées à différentes profondeurs. Dans un modèle simplifié, la peau est constituée d'une couche nommée « épiderme », semi transparente et située en surface puis, sous l'épiderme, d'une couche nommée le « derme » et comprenant, entre autres, les vaisseaux sanguins (ou réseau vasculaire) dans lesquels l'hémoglobine est fortement réfléchissante aux longueurs d'onde élevées proches du rouge en étant comprises par exemple entre 760 et 930 nm ce qui permet ici de révéler ou mettre en évidence le réseau vasculaire de la peau du porteur. En d'autres termes, le spectre d'absorption lumineux des composantes de l'épiderme et du derme constituant la peau n'étant pas uniforme selon les longueurs d'ondes électromagnétiques, l'apparence et la couleur de la peau résultent d'une combinaison complexe de ces phénomènes. Ainsi, lorsqu'il s'agit de mettre en évidence ou de révéler un élément d'information biométrique comme la texture de la peau de ce porteur, texture essentiellement formée de crevasses ou cavités, l'éclairage de la peau peut être alors assuré par une source d"éclairage restreinte aux longueurs d'onde aux alentours du rouge qui tend à faire disparaître le phénomène d'ombres du fond des crevasses. En effet, il se produit un effet de rétro projection par réflexion sur le derme et à travers l'épiderme de ces longueurs d'onde proches du rouge, alors que l'éclairage de la peau par une source de spectre colorimétrique éloigné du rouge, typiquement la bande de longueurs d'onde située entre le violet (400 nm) et jusqu'au jaune-orangé (600 nm), permet au contraire de mettre fortement en contraste ces crevasses de la peau par l'apparition d'ombres au fond de ces crevasses. On notera que l'identification d'un élément d'information biométrique compris dans la peau peut être améliorée par l'utilisation du capteur d'image thermique 28 de préférence sans éclairage. A titre d'exemple, pour la mise en évidence de la texture de la peau notamment lorsque la portion de la peau concernée de ce porteur est pourvue de poils, l'utilisation du capteur d'image thermique 28 permet de révéler les crevasses de cette texture de la peau qui sont généralement plus chaudes que la peau environnante et les poils plus froids que cette peau environnante. Ainsi dans cette configuration les poils peuvent être distingués thermiquement des crevasses de la texture de la peau du fait de cette différence entre leur température respective.

On notera que la capture d'images thermiques peut être réalisée sous un éclairage dans une longueur d'onde donnée selon l'élément d'information biométrique qu'il convient de mettre en évidence ou de révéler.

On comprend donc, selon le principe de l'invention, que l'identification du porteur est réalisée à partir d'au moins un élément d'information biométrique compris dans des images d'une portion de peau de ce porteur qui peut être éclairée le cas échéant selon différentes longueur d'onde afin de capturer des images comprenant l'élément d'information biométrique recherché. Ainsi, cet élément d'information biométrique, compris dans ces images, peut être mis en évidence par l'éclairage effectué dans différentes longueurs d'onde ou sans éclairage par exemple lorsqu'il s'agit de réaliser une capture d'images thermiques.

Dans cette montre, les éléments de mémoire 6 de l'unité de traitement 2 de la montre 100 comprennent des données relatives à des éléments d'authentification 31 spécifiques à chaque serveur distant 200 auxquels la montre 100 est amenée à se connecter. Autrement dit ces éléments d'authentification son propre au porteur et/ou à la montre 100, et permettent ainsi au porteur de se connecter au serveur 200 qu'il désire par l'intermédiaire d'une sélection d'une fonction de la montre 100. Ces éléments de mémoire 6 comportent également des algorithmes de traitement numérique 29 d'images permettant de caractériser au moins un élément d'information biométrique relatif à la peau du porteur et qui est compris dans les images relatives à la portion de peau du porteur. Ces éléments de mémoire 6 comportent aussi des algorithmes de génération 30 de l'élément d'identification numérique de référence mais aussi d'un élément d'identification numérique.

Le système 1 est apte à mettre en oeuvre un procédé de connexion sécurisée au serveur distant 200 d'un fournisseur de prestation de service, représenté sur la figure 2. Un tel serveur 200 d'un fournisseur de prestation de service peut être par exemple un serveur d'un fournisseur de prestations bancaires ou de prestations commerciales (boutiques en ligne, entreprises de commerce électronique), de prestations de messagerie électronique ou de messagerie instantanée.

Ce procédé comprend une étape d'authentification 9 du porteur de la montre 100 autorisant un accès à l'utilisation de fonctions de cette montre 100. Cette étape d'authentification 9 permet donc d'identifier de manière certaine le porteur de la montre afin qu'il puisse avoir accès à l'utilisation de toutes les fonctions de cette montre 100. Autrement dit, elle permet au porteur d'apporter la preuve de son identité en prévoyant la saisie d'un code d'authentification ou d'un code secret par le biais d'une interaction entre le porteur et l'interface de saisie 34.

En complément, on comprend que les fonctions peuvent être mises en oeuvre par des programmes informatiques exécutés par l'unité de traitement 2 de la montre 100 dès lors que ces programmes sont activés/sélectionnés suite à une interaction entre le porteur et l'interface de saisie 34 de cette montre 100. Ces programmes informatiques ainsi exécutés permettent au porteur de bénéficier de prestations de service par exemple de type bancaire, commerciale ou encore de messagerie instantanée ou électronique.

A la suite de cette étape d'authentification 9, le procédé comprend une étape de sélection 11 d'une desdites fonctions à partir de l'interface de saisie 34 de ladite montre 100 visant à réaliser un établissement d'une connexion entre ladite montre 100 et le serveur distant 200. On comprend que les fonctions peuvent être mises en oeuvre par des programmes informatiques exécutés par l'unité de traitement 2 de la montre 100 dès lors que ces fonctions qui sont affichées sur/dans l'interface de diffusion d'une information visuelle 3, sont activées/sélectionnées suite à une interaction entre le porteur et l'interface de saisie 34 de cette montre 100. Ces programmes informatiques ainsi exécutés permettent au porteur de bénéficier de prestations de service par exemple de type bancaire, commerciale ou encore de messagerie instantanée ou électronique.

Le procédé comprend ensuite une étape d'identification 12 du porteur de la montre 100 à partir d'au moins un élément d'information biométrique compris dans une portion de peau de ce porteur. Un telle étape 12 est effectuée systématiquement à la suite de la sélection d'une fonction afin notamment de permettre à l'unité de traitement 2 de contrôler que le porteur de la montre 100 est toujours en possession de cette dernière et qu'il est bien à l'origine de la sélection de la fonction. Cette étape 12 comprend une sous-étape d'acquisition 13 par le capteur 33 d'une pluralité d'images d'une portion de peau du porteur, ladite portion de peau étant agencée de manière adjacente audit capteur 33, lesdites images comprenant ledit au moins un élément d'information biométrique compris dans cette portion de peau. Cette sous-étape 13 comprend une phase d'éclairage 14 de la portion de peau selon différentes longueurs d'onde. Plus précisément, lors de cette phase 14, l'unité de traitement 2 pilote le capteur biométrique multispectral 33 et en particulier la source d'éclairage 27 de manière à ce que cette dernière émette un rayonnement lumineux en direction de la portion de peau selon une longueur d'onde précise adaptée à la mise en évidence ou à révéler ledit au moins un élément d'information biométrique spécifique de la peau qui est ici recherché. Une fois l'éclairage configuré, la sous-étape d'acquisition 13 comprend une phase de capture 15 d'images de cette portion de peau éclairée à au moins une longueur d'onde susceptible de mettre en évidence ou de révéler ledit au moins un élément d'information biométrique. Lors de cette phase 15, l'unité de traitement 2 pilote le capteur biométrique multispectral 33 de peau et en particulier le capteur photographique 26 de manière synchrone avec l'activation/désactivation de la source d'éclairage 27 à une longueur d'onde donnée et ce, afin de réaliser une capture d'au moins une image relative à la portion de peau éclairée pour au moins une longueur d'onde.

Cette sous-étape d'acquisition 13 peut comprendre aussi une phase de capture 16 d'au moins une image thermique de la portion de peau. Une telle phase 16 est réalisée de préférence sans éclairage mais dans d'autres alternatives un éclairage de la portion peut être effectué dans au moins une longueur d'onde donnée, cela dépendant évidemment de l'élément d'information biométrique qu'il convient de mettre en évidence ou de révéler. Cette phase 16 peut être réalisée avant ou après les phases d'éclairage 14 et de capture 15 d'images.

L'étape d'identification 12 comprend ensuite une sous-étape de génération 17 de l'élément d'identification numérique à partir dudit au moins un élément d'information biométrique compris dans les images acquises de la portion de peau. Une telle sous-étape 17 comprend une phase de caractérisation 18 dudit élément d'information biométrique compris dans les images relatives à ladite portion de peau. Lors de cette phase 18, l'unité de traitement 2 met en oeuvre des algorithmes de traitement 29 des images acquises visant à identifier/détecter dans chacune d'entre elles ledit au moins un élément d'information biométrique qu'elles comprennent. Ainsi que nous l'avons déjà évoqué précédemment, il peut s'agir d'éléments d'information relatifs par exemple à la texture de la peau ou au réseau vasculaire compris dans cette portion de peau du porteur. La mise en oeuvre de ces algorithmes 29, 30 par l'unité de traitement 2 peut, à titre d'exemple, prévoir un processus de découpe en segments de ces images. On comprend ici que chaque image acquise donne une vue globale de la portion de la peau du porteur, et comporte alors des zones de pertinence variables pour l'identification dudit au moins un élément d'information biométrique. Un tel processus de découpe participe à extraire les segments à traiter et à éliminer les parties à ne pas traiter dans ces images. Ces algorithmes 29 peuvent ensuite prévoir un indexage de ces segments d'image comprenant des caractéristiques relatives audit au moins un élément d'information biométrique particulier à identifier, par zones de localisation dans la portion de peau et ce, afin de pouvoir affecter à chaque zone le traitement adéquat vis-à-vis de la typologie morphologique de la caractéristique de cette zone géographique de la portion. Dans ce contexte, ces algorithmes 29 traitent chaque segment de ces images en mettant en évidence les informations portées par les pixels de chacune de ces images par la réalisation d'opérations d'analyse d'image de type traitements, transformations et détections. Par la suite, ces algorithmes 29 effectuent des opérations de filtrage et d'extraction de caractéristiques ou de vectorisation, afin de convertir les données images relatives audit au moins un élément d'information biométrique identifié et extrait, en des données paramétriques, typiquement des valeurs numériques relatives exprimées par exemple en indice ou en pourcentage.

On comprend ici que l'acquisition de plusieurs images représentant la même portion de peau sous différents éclairages ou sans éclairage, participe à améliorer la précision et l'efficacité de cette phase de caractérisation 18.

Par la suite, la sous-étape de génération 17 comprend une phase de conception 19 de l'élément d'identification numérique à partir de la caractérisation dudit au moins un élément d'information biométrique. Lors de cette phase 19, l'unité de traitement 2 met en oeuvre des algorithmes de génération 30 d'un tel élément d'identification numérique spécifiquement prévus pour le traitement des données paramétriques obtenues lors de la phase de caractérisation 18, lesquelles données paramétriques étant relatives audit au moins un élément d'information biométrique.

Ensuite, l'étape d'identification 12 comprend une sous-étape de validation 20 de l'élément d'identification numérique généré en prévision d'un contrôle de l'identité du porteur. Cette sous-étape de validation 20 comprend une phase de comparaison 21, mise en oeuvre par l'unité de traitement 2, entre l'élément d'identification numérique généré et l'élément d'identification numérique de référence. Dans ce procédé, l'élément d'identification numérique de référence peut être créé, dès lors que le porteur a été dûment authentifié et que son identité est certaine et ce, lors d'une étape de définition 11 de cet élément d'identification numérique de référence prévoyant des sous-étapes similaires aux sous-étapes de d'acquisition 13 et de génération 17 mises en oeuvre durant l'étape d'identification 12. Dans ce procédé, une fois que le porteur de la montre 100 est authentifié, l'unité de traitement 2 met en oeuvre cette étape de définition 11 et effectue ensuite un archivage de l'élément d'identification numérique de référence obtenu dans les éléments de mémoire 6 de l'unité de traitement 2. Cet élément d'identification numérique de référence peut donc être déterminé automatiquement par l'unité de traitement 2 ou configuré par le porteur durant un processus de réglage visant à guider le porteur dans la définition de cet élément d'identification numérique de référence.

Cette phase de comparaison 21 comprend une sous-phase de rejet de l'identification du porteur si l'élément d'identification numérique généré est sensiblement différent ou différent de l'élément d'identification numérique de référence. Dans ce cas de figure, l'établissement de la connexion au serveur distant est suspendu voire supprimée. De plus, l'accès à la montre 100 est aussi supprimé et en particulier l'accès aux fonctions de cette montre. Dans ce contexte, le porteur de la montre est invité à s'authentifier de nouveau afin d'apporter la preuve de son identité par la saisie d'un code d'authentification ou d'un code secret et ce, par le biais d'une interaction entre le porteur et l'interface de saisie 34. En effet, le porteur et propriétaire de la montre 100 peut ne plus être en sa possession.

La phase de comparaison 21 comprend aussi une sous-phase d'identification du porteur avec succès si l'élément d'identification numérique généré est sensiblement similaire ou similaire à l'élément d'identification numérique de référence. Dans ce cas, le procédé prévoit alors la mise en oeuvre d'une étape de transmission 22 audit serveur distant 200 de l'élément d'authentification relatif à la fonction sélectionnée dès lors que le porteur est identifié. Cette étape 22 comprend une sous-étape de sélection 23 de l'élément d'authentification relatif à ladite fonction sélectionnée en prévision de son envoi au serveur distant 200. Lors de cette sous-étape 23, la fonction sélectionnée est identifiée, et sur la base de cette identification une sélection de l'élément d'authentification est effectuée parmi les l'éléments d'authentification archivés dans les éléments de mémoire 6 de l'unité de traitement 2 de la montre 100. Ainsi que nous l'avons déjà évoqué précédemment, les éléments d'authentification 31 peuvent être des clés, certificats, codes d'authentification, mots de passe et codes personnels qui sont chacun dédiés à l'authentification du porteur de la montre 200 auprès du fournisseur de prestation service correspondant et donc auprès du serveur distant compris dans une plateforme technique de ce fournisseur. On comprend ici, que l'élément d'authentification est dédié à une authentification du porteur auprès d'un serveur distant d'un fournisseur de prestation de service donné. En complément, les éléments d'authentification sont archivés dans l'éléments de mémoire 6 de l'unité de traitement 2 de la montre 100 en étant associés chacun à un élément d'identification numérique d'une fonction correspondante.

Le procédé comprend ensuite une étape de réalisation d'une authentification 24 du porteur par le serveur distant 200 à partir dudit élément d'authentification en vue d'autoriser un échange de données entre la montre 100 et ce serveur distant 200. Une telle étape 24 comprend une sous-étape de comparaison 25, réalisée par l'unité de traitement 210 du serveur 200, entre l'élément d'authentification reçu de la montre et un élément d'authentification de référence 32 archivé dans le serveur 200. Cette sous-étape de comparaison 25 comprend une phase de rejet de l'identification du porteur 22 si l'élément d'authentification est sensiblement différent ou différent de l'élément d'authentification de référence 32. Dans ce cas de figure, l'établissement de la connexion au serveur distant 200 est suspendu voire supprimée.

La sous-étape de comparaison 25 comprend aussi une phase d'identification du porteur avec succès si l'élément d'authentification est sensiblement similaire ou similaire à l'élément d'authentification de référence 32. Dans ce contexte, un échange de données entre la montre 100 et ce serveur distant 200 en lien avec la prestation de service est alors autorisé.

Ainsi, l'invention permet au porteur et propriétaire de la montre 200 de pouvoir être authentifié auprès de tous les serveurs distants des fournisseurs de prestation de service sur la seule base de son identification à partir d'au moins un élément d'information biométrique compris dans une portion de sa peau et ce, sans avoir à saisir directement l'élément d'authentification spécifique à chacun de ces serveurs 200 afin de pouvoir s'authentifier auprès du prestataire de service correspondant. On comprend donc que cette identification automatique et non-intrusive permet au porteur de pouvoir ainsi connecter sa montre à tous les serveurs distants chacun en lien avec une fonction de la montre relative avec une prestation de service.

L'invention porte aussi sur un programme d'ordinateur comprenant des instructions de code de programme pour l'exécution des étapes 10 à 25 de ce procédé lorsque ledit programme est exécuté par les unités de traitement de la montre et du serveur.

## Revendications

1. Procédé de connexion sécurisée d'une montre (100) à un serveur distant (200) d'un fournisseur de prestation de service comportant les étapes suivantes :
- authentification (9) du porteur de la montre (100) exécutée par ladite montre, autorisant un accès à l'utilisation de fonctions de cette montre (100), et
- sélection (11) exécutée par ledit porteur de la montre, d'une desdites fonctions à partir d'une interface de saisie de ladite montre visant à réaliser un établissement d'une connexion entre ladite montre (100) et le serveur distant (200) ;
- indentification (12) du porteur de la montre (100) exécutée par ladite montre, à partir d'au moins un élément d'information biométrique compris dans une portion de peau de ce porteur ;
- transmission (22) audit serveur distant (200) d'un élément d'authentification relatif à la fonction sélectionnée dès lors que le porteur est identifié, et
- réalisation d'une authentification (24) du porteur par le serveur distant (200) à partir dudit élément d'authentification en vue d'autoriser un échange de données entre la montre (100) et ce serveur distant (200).

2. Procédé selon la revendication précédente, **caractérisé en ce que** l'étape de transmission (22) comprend une sous-étape de sélection (23) de l'élément d'authentification relatif à ladite fonction sélectionnée en prévision de son envoi au serveur distant (200) et ce, parmi des éléments d'authentification archivés dans les éléments de mémoire (6) de l'unité de traitement (2) de la montre (100).

3. Procédé selon l'une quelconque des revendications précédentes, **caractérisé en ce que** l'étape de réalisation d'une authentification (24) comprend une sous-étape de comparaison (25) entre l'élément d'authentification reçu de la montre (100) et un élément d'authentification de référence (32) archivé dans le serveur (200).

4. Procédé selon l'une quelconque des revendications précédentes, **caractérisé en ce que** l'étape d'identification (12) comprend une sous-étape d'acquisition (13) par au moins un capteur biométrique multispectral de peau (33) compris dans la montre (100), d'une pluralité d'images d'une portion de peau du porteur adjacente audit capteur (33), lesdites images comprenant ledit au moins un élément d'information biométrique compris dans cette portion de peau.

5. Procédé selon l'une quelconque des revendications précédentes, **caractérisé en ce que** l'étape d'identification (12) comprend une sous-étape de génération (17) d'un élément d'identification numérique à partir dudit au moins un élément d'information biométrique compris dans les images acquises de la portion de peau.

6. Procédé selon l'une quelconque des revendications précédentes, **caractérisé en ce que** l'étape d'identification (12) comprend une sous-étape de validation (20) d'un élément d'identification numérique généré en prévision de l'identification du porteur.

7. Procédé selon l'une quelconque des revendications précédentes, **caractérisé en ce que** l'élément d'information biométrique est relatif à un réseau vasculaire ou à une texture de cette peau.

8. Système (1) de connexion sécurisée d'une montre (100) à un serveur distant le système (1) étant configuré pour mettre en œuvre le procédé selon l'une quelconque des revendications précédentes, ledit système comprenant ladite montre (100) et ledit serveur distant (200), ladite montre (100) comprenant les éléments suivants reliés entre eux : une unité de traitement (2), un capteur biométrique multispectral de peau (33), une interface de saisie (34), une interface de diffusion d'une information visuelle (3) et une interface de communication sans fil pour des échanges de données avec ledit serveur distant (200).

9. Programme d'ordinateur comprenant des instructions de code de programme lesquelles, lorsqu'elles sont exécutées par les unités de traitement (2, 210) de la montre (100) et du serveur distant (200) du système selon la revendication 8, engendrent l'exécution par ce système des étapes (10 à 25) du procédé selon l'une quelconque des revendications 1 à 7.

## Patentansprüche

1. Ein Verfahren zum sicheren Verbinden einer Uhr (100) mit einem entfernten Server (200) eines Dienstanbieters, das die folgenden Schritte umfasst:
- die Authentifizierung (9) des Trägers der Uhr (100), die von der Uhr ausgeführt wird, die den Zugang zur Nutzung der Funktionen dieser Uhr (100) erlaubt, und
- Auswahl (11) einer der Funktionen, die von einer Eingabeschnittstelle der Uhr aus ausgeführt werden, um eine Verbindung zwischen der Uhr (100) und dem entfernten Server (200) herzustellen, durch den Träger der Uhr;
- Identifizierung (12) des Trägers der Uhr (100), die von der Uhr ausgeführt wird, anhand von mindestens einem biometrischen Informationselement, das in einem Bereich der Haut dieses Trägers enthalten ist;
- Übertragen (22) eines Authentifizierungselements an den entfernten Server (200), das sich auf die ausgewählte Funktion bezieht, sobald der Träger identifiziert ist, und
- Durchführung einer Authentifizierung (24) des Trägers durch den entfernten Server (200) anhand des besagten Authentifizierungselements, um einen Datenaustausch zwischen der Uhr (100) und diesem entfernten Server (200) zuzulassen.

2. Verfahren nach dem vorhergehenden Anspruch, **dadurch gekennzeichnet, dass** der Übertragungsschritt (22) einen Unterschritt (23) enthält, in dem das Authentifizierungselement, das sich auf die ausgewählte Funktion bezieht, im Vorgriff auf seine Übertragung an den entfernten Server (200) unter den Authentifizierungselementen ausgewählt wird, die in den Speicherelementen (6) der Verarbeitungseinheit (2) der Uhr (100) archiviert sind.

3. Verfahren nach einem der vorhergehenden Ansprüche, **dadurch gekennzeichnet, dass** der Schritt der Durchführung einer Authentifizierung (24) einen Teilschritt (25) des Vergleichs zwischen dem von der Uhr (100) empfangenen Authentifizierungselement und einem im Server (200) archivierten Referenzauthentifizierungselement (32) enthält.

4. Verfahren nach einem der vorhergehenden Ansprüche, **dadurch gekennzeichnet, dass** der Identifizierungsschritt (12) einen Unterschritt (13) enthält, bei dem durch mindestens einen multispektralen biometrischen Hautsensor (33), der in der Uhr (100) enthalten ist, eine Vielzahl von Bildern eines Bereichs der Haut des Trägers in der Nähe des Sensors (33) erfasst wird, wobei die Bilder das mindestens eine biometrische Informationselement enthalten, das in diesem Bereich der Haut enthalten ist.

5. Verfahren nach einem der vorhergehenden Ansprüche, **dadurch gekennzeichnet, dass** der Identifizierungsschritt (12) einen Unterschritt (17) der Erzeugung eines digitalen Identifizierungselements aus dem mindestens einen biometrischen Informationselement, das in den erfassten Bildern des Bereichs der Haut enthalten ist, enthält.

6. Verfahren nach einem der vorhergehenden Ansprüche, **dadurch gekennzeichnet, dass** der Identifizierungsschritt (12) einen Teilschritt (20) der Validierung eines digitalen Identifizierungselements enthält, das in Erwartung der Identifizierung des Trägers erzeugt wurde.

7. Verfahren nach einem der vorhergehenden Ansprüche, **dadurch gekennzeichnet, dass** sich das biometrische Informationselement auf ein Gefäßnetz oder auf eine Textur dieser Haut bezieht.

8. System (1) zum sicheren Verbinden einer Uhr (100) mit einem entfernten Server, wobei das System (1) so konfiguriert ist, dass es das Verfahren nach einem der vorhergehenden Ansprüche ausführt, wobei das System die Uhr (100) und den entfernten Server (200) enthält, wobei die Uhr (100) die folgenden miteinander verbundenen Elemente enthält: eine Verarbeitungseinheit (2), einen multispektralen biometrischen Hautsensor (33), eine Eingabeschnittstelle (34), eine Schnittstelle zum Senden einer visuellen Information (3) und eine drahtlose Kommunikationsschnittstelle zum Datenaustausch mit dem entfernten Server (200).

9. Computerprogramm mit Programmcodebefehlen, die, wenn sie von den Verarbeitungseinheiten (2, 210) der Uhr (100) und des entfernten Servers (200) des Systems nach Anspruch 8 ausgeführt werden, dieses System veranlassen, die Schritte (10 bis 25) des Verfahrens nach einem der Ansprüche 1 bis 7 auszuführen.

## Claims

1. A method for securely connecting a watch (100) to a remote server (200) of a service provider including the following steps:
- authenticating (9) the wearer of the watch (100) executed by said watch, authorising access to use the functions of this watch (100), and
- selecting (11) executed by said wearer of the watch, one of said functions from an input interface of said watch aiming at establishing a connection between said watch (100) and the remote server (200);
- identifying (12) the wearer of the watch (100) executed by said watch, from at least one biometric information element comprised in a portion of this wearer's skin;
- transmitting (22) to said remote server (200) an authentication element relating to the selected function once the wearer is identified, and
- carrying out an authentication (24) of the wearer by the remote server (200) from said authentication element in order to authorise an exchange of data between the watch (100) and this remote server (200).

2. The method according to the preceding claim, **characterised in that** the transmission step (22) comprises a sub-step (23) of selecting the authentication element relating to said selected function in anticipation of its sending to the remote server (200), among the authentication elements archived in the memory elements (6) of the processing unit (2) of the watch (100).

3. The method according to any one of the preceding claims, **characterised in that** the step of carrying out an authentication (24) comprises a sub-step (25) of comparison between the authentication element received from the watch (100) and a reference authentication element (32) archived in the server (200).

4. The method according to any one of the preceding claims, **characterised in that** the identification step (12) comprises a sub-step (13) of acquiring by at least one multispectral biometric skin sensor (33) comprised in the watch (100), a plurality of images of a portion of the wearer's skin adjacent to said sensor (33), said images comprising said at least one biometric information element comprised in this skin portion.

5. The method according to any one of the preceding claims, **characterised in that** the identification step (12) comprises a sub-step (17) of generating a digital identification element from said at least one biometric information element comprised in the acquired images of the skin portion.

6. The method according to any one of the preceding claims, **characterised in that** the identification step (12) comprises a sub-step (20) of validating a digital identification element generated in anticipation of the identification of the wearer.

7. The method according to any one of the preceding claims, **characterised in that** the biometric information element is related to a vascular network or to a texture of this skin.

8. A system (1) for securely connecting a watch (100) to a remote server, the system (1) being configured to implement the method according to any one of the preceding claims, said system comprising said watch (100) and said remote server (200), said watch (100) comprising the following elements connected together: a processing unit (2), a multispectral biometric skin sensor (33), an input interface (34), an interface for broadcasting a visual piece of information (3) and a wireless communication interface for data exchanges with said remote server (200).

9. A computer program comprising program code instructions which, when executed by the processing units (2, 210) of the watch (100) and of the remote server (200) of the system according to claim 8, cause this system to execute the steps (10 to 25) of the method according to any one of claims 1 to 7.
